# FASCICULE DE BREVET EUROPEEN

(11) **EP 2 195 185 B1**
(45) Date de publication et mention de la délivrance du brevet: **13.04.2011**
(21) Numéro de dépôt: 08838982.0
(22) Date de dépôt: 30.09.2008
(51) Int. Cl.: B60L 11/18, B60L 11/02, B60W 10/26, B60W 20/00

(54) **PROCEDE DE PILOTAGE D'UNE CHAINE DE TRACTION HYDRIDE BASE SUR L'ETAT DE CHARGE DE LA BATTERIE**
VERFAHREN ZUM ANTREIBEN EINES HYBRID-ANTRIEBSZUGES AUF BASIS EINES BATTERIELADESTATUS
METHOD FOR DRIVING A HYBRID TRACTION CHAIN BASED ON THE BATTERY CHARGE STATE

(30) Priorité: 03.10.2007 FR 0758040
(43) Date de publication de la demande: 16.06.2010
(73) Titulaire: Peugeot Citroën Automobiles SA, 78140 Vélizy Villacoublay (FR)
(72) Inventeur: NOIRET, Christian, F-78230 Le Pecq (FR)
(86) Numéro de dépôt international: PCT/FR2008/051752
(87) Numéro de publication internationale: WO 2009/050406

(56) Documents cités:
- EP-A- 0 611 675
- EP-A- 0 917 982
- US-A- 5 550 445
- US-A- 5 839 533
- US-A1- 2006 076 171
- US-A1- 2006 116 797

## Description

La présente invention concerne un procédé de pilotage d'une chaîne de traction hybride basée uniquement sur la gestion du niveau de charge de la batterie. Par chaîne de traction hybride d'un véhicule, notamment d'un véhicule automobile, on entend généralement un ensemble d'organes équipant le véhicule hybride, comportant notamment :
- un moteur thermique destiné à fournir l'énergie de traction principale ;
- une machine électrique (MEL) couplée aux roues motrices du véhicule par un rapport de démultiplication fixe ou variable en étant apte à fonctionner en mode moteur ou générateur : en mode moteur, la machine fournit une énergie électrique aux roues motrices, en mode générateur, la machine électrique transforme l'énergie mécanique fournie par le moteur thermique et/ou les roues (freinage récupératif) en énergie électrique stockée dans une batterie ; par batterie, on entend plus généralement un système de stockage d'énergie électrique pouvant prendre la forme d'un ou plusieurs éléments de base d'accumulateur et/ou de supercapacités appelés également super condensateurs pris seuls ou en combinaison ;
- une machine électrique permettant d'assurer le démarrage du moteur thermique, par exemple dans un mode de fonctionnement « Stop and Go»;
- un système de freinage récupératif actif, c'est-à-dire, par exemple, piloté par la pédale de frein, ou passif, c'est-à-dire, par exemple, piloté par le début de course de l'accélérateur.

La nécessité de réduire le réchauffement de la planète en réduisant les émissions de CO2 a accéléré le développement des chaînes de traction hybride.

Afin d'optimiser au mieux le rendement d'une telle chaîne de traction comportant de multiples organes, il est nécessaire d'avoir un système de pilotage qui supervise les énergies mises en jeu au sein de la chaîne de traction en pilotant à tour de rôle ou en même temps les différents organes de la chaîne de traction.

Parmi les différents modes de fonctionnement possibles d'une chaîne de traction hybride, on distinguera principalement les cas de figure suivants :
- traction électrique pure ;
- traction thermique pure,
- traction combinée : thermique et électrique (fonction boost),
- traction thermique et recharge de la batterie ;
- freinage électrique pur ;
- freinage dissipatif pur ;
- freinage électrique et dissipatif.

Il existe différentes stratégies de pilotage d'un véhicule hybride qui sont basées généralement sur les rendements des moteurs thermique et électrique ainsi que sur les rendements de la batterie et de l'électronique de puissance associée.

Il est connu également du document US-B2-7173396, un procédé de pilotage exploitant la gestion d'une batterie d'une chaîne de traction hybride qui commande les décharges et recharges de la batterie en fonction des différentes conditions de vie du véhicule hybride.

Partant du principe que la fonction de traction électrique n'existe, par nature, que lorsqu'il y a suffisamment d'énergie dans la batterie et que, par ailleurs, la durée de vie de la batterie est directement liée à la profondeur de décharge et le nombre de cycles à réaliser, la présente invention propose une solution pour piloter la chaîne de traction hybride en se basant uniquement sur la gestion du niveau de charge de la batterie et vise plus particulièrement à optimiser la maîtrise de la profondeur de décharge et le nombre de cycles de charge et de décharge de la batterie pour économiser au maximum l'usure de la batterie qui est très sollicitée dans ce type de fonctionnement.

Une telle stratégie de pilotage doit donc être capable de déterminer périodiquement dans quel mode de traction le véhicule doit se trouver, décider de la nécessité d'imposer une recharge de la batterie par le moteur thermique, et d'autoriser ou d'interdire l'usage du freinage récupératif.

A cet effet, la présente invention a pour objet un procédé de pilotage d'une chaîne de traction hybride d'un véhicule, notamment d'un véhicule automobile, du type comportant différents organes dont un moteur thermique et au moins une machine électrique de traction apte à fonctionner en moteur ou en générateur et permettant des modes de traction thermique et/ou électrique, un système de freinage apte à réaliser un freinage récupératif et/ou dissipatif, et une batterie ayant une puissance électrique nominale déterminée, caractérisé en ce qu'il comporte les étapes suivantes :
- une première étape d'acquisition de la volonté d'accélération du conducteur pour déterminer la puissance à la roue correspondante, d'acquisition du niveau d'état de charge de la batterie, compris entre un seuil minimal autorisé et un seuil maximal autorisé, pour un mode de traction déterminé, et d'acquisition de la puissance de freinage disponible permettant de décider d'un freinage électrique ou dissipatif ;
- une deuxième étape de gestion de l'état de charge qui, en fonction d'un indicateur d'état de besoin de recharge de la batterie, d'un premier seuil minimal d'état de charge de la batterie, d'un deuxième seuil minimal d'état de charge de la batterie supérieur au premier, et de la puissance à la roue demandée par le conducteur, décide soit d'imposer une recharge de la batterie soit de fixer des paramètres d'entrée pour le choix du mode de traction ; et
- une troisième étape de choix du mode de traction qui en fonction de la puissance batterie réellement disponible, de la puissance de traction à la roue demandée par le conducteur, et de la puissance maximale disponible en sortie du moteur thermique, décide du mode de traction le plus adapté à la situation de vie du véhicule.

Selon une caractéristique, l'étape de gestion déclenche impérativement la recharge de la batterie quand l'état de charge de la batterie est inférieur au premier seuil minimal déterminé et quand la puissance demandée à la roue par le conducteur est nulle.

Selon une autre caractéristique, quand la puissance demandée à la roue est supérieure à la puissance maximale disponible en sortie du moteur thermique, la puissance batterie réellement disponible est calculée en multipliant la puissance nominale de la batterie par un premier coefficient de charge de la batterie dont la valeur évolue entre 0 et 1 suivant une loi préétablie, entre le premier seuil minimal déterminé d'état de charge de la batterie, supérieur au seuil minimal autorisé, et un premier seuil maximal déterminé , inférieur au seuil maximum autorisé.

Quand la puissance demandée à la roue est inférieure à la puissance maximale disponible en sortie du moteur thermique, la puissance batterie réellement disponible est calculée en multipliant la puissance nominale de la batterie par un deuxième coefficient de charge de la batterie dont la valeur évolue entre 0 et 1 suivant une loi préétablie, entre le deuxième seuil minimal déterminé d'état de charge de la batterie, supérieur au seuil minimal autorisé, et un deuxième seuil maximal déterminé, inférieur au seuil maximal autorisé.

Selon une autre caractéristique, l'étape de choix du mode de traction choisit le mode de traction électrique pur quand la puissance à la roue demandée par le conducteur est inférieure à la puissance batterie disponible et quand l'état de charge de la batterie est supérieur au deuxième seuil minimal déterminé.

Selon une autre caractéristique, l'étape de choix du mode de traction choisit le mode de traction thermique avec recharge de la batterie quand la puissance à la roue demandée par le conducteur est supérieure à la puissance batterie disponible et quand l'état de charge de la batterie est inférieur au deuxième seuil minimal déterminé, et quand la puissance à la roue demandée par le conducteur est inférieure à la puissance disponible par le moteur thermique. Selon une autre caractéristique, l'étape de choix du mode de traction choisit le mode de traction thermique seul, sans recharge de la batterie, quand la puissance à la roue demandée par le conducteur est supérieure à la puissance batterie disponible et quand l'état de charge de la batterie est supérieur au deuxième seuil minimal déterminé.

Selon une autre caractéristique, l'étape de choix du mode de traction choisit le mode de traction thermique seul, sans recharge de la batterie, quand la puissance à la roue demandée par le conducteur est supérieure à la puissance maximale disponible en sortie du moteur thermique et quand l'état de charge de la batterie est inférieur au premier seuil minimal déterminé.

Selon une autre caractéristique, l'étape de choix du mode de traction choisit les modes de traction thermique et électrique, sans recharge de la batterie, quand la puissance à la roue demandée par le conducteur est supérieure à la puissance maximale disponible en sortie du moteur thermique et quand l'état de charge de la batterie est supérieur au premier seuil minimal déterminé.

Selon une autre caractéristique, le procédé consiste à rajouter un décalage de seuil respectivement aux premier et deuxième seuils d'état de charge de la batterie pour éviter toute oscillation entre le mode de traction électrique pur et le mode de traction thermique avec recharge de la batterie.

Selon une autre caractéristique, lorsque le freinage électrique est utilisé et atteint la puissance maximale disponible par la machine électrique, il ajoute le freinage dissipatif en cas de besoin.

Selon une autre caractéristique, le freinage électrique est interdit lorsque le niveau de charge de la batterie est supérieur au seuil maximal autorisé.

Selon une autre caractéristique ; lorsque le conducteur n'actionne ni le frein, ni l'accélérateur, il commande une puissance de rampage générée par la chaîne de traction.

L'invention a pour principal avantage de ne nécessiter qu'un nombre limité d'opérations de mesure et de calcul et donc de limiter la puissance de calcul nécessaire pour la gestion de l'énergie au sein d'une chaîne de traction hybride et donc d'optimiser son pilotage en s'appuyant sur cette gestion.

Un tel système n'est pas lié à une architecture spécifique de chaîne de traction et peut s'appliquer à des chaînes de traction telles qu'à dérivation de puissance, parallèle, série, ....

Sa mise en oeuvre est en outre simple, robuste et performante.

Les organes de la chaîne de traction hybride : le moteur thermique, les machines électriques, la transmission et la capacité de freinage récupératif, seront supposés être utilisés sur leurs points de meilleur rendement.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est un graphe représentatif de l'évolution des deux coefficients de charge de la batterie mis en oeuvre par le procédé selon l'invention en fonction du niveau d'état de charge de la batterie appelé également SOC de la batterie ;
- la figure 2 est un graphe représentatif de plages d'utilisation de la batterie avec le procédé selon l'invention ;
- la figure 3 est une représentation synoptique des principales étapes du procédé de pilotage selon l'invention ;
- la figure 4 est une représentation synoptique d'une première étape du procédé selon l'invention, d'acquisition de la volonté conducteur, de l'état de charge de la batterie et de la gestion du freinage ;
- la figure 5 est une représentation synoptique d'une deuxième étape du procédé selon l'invention, de gestion de l'état de charge (SOC) de la batterie ; et
- la figure 6 est une représentation synoptique d'une troisième étape du procédé selon l'invention, de du choix du mode de traction.

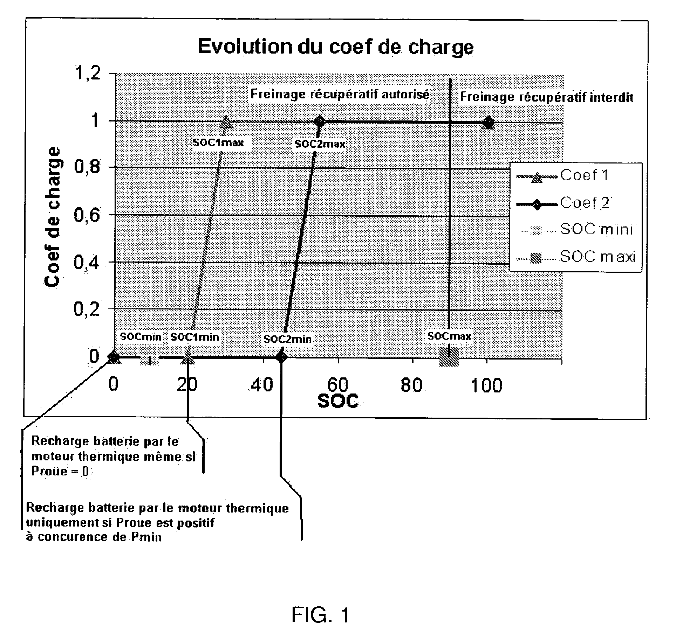

La figure 1 illustre la stratégie de recharge de la batterie mise en oeuvre par le procédé de pilotage selon l'invention.

Cette stratégie est principalement basée sur la gestion de l'énergie batterie via la détermination de deux coefficients de charge, respectivement Coef1 et Coef2, prenant des valeurs comprises entre 0 et 1 et qui multipliés par la puissance batterie nominale bat déterminera la puissance réellement autorisée Pbat pour effectuer une traction électrique pure ou combinée, thermique et électrique (boost)

Pour cela, le procédé selon l'invention calcule l'un ou l'autre des coefficients Coef1 ou Coef2 en fonction de la puissance demandée à la roue par le conducteur Proue.

Si la puissance demandée à la roue Proue est supérieure à la puissance maximale disponible en sortie du moteur thermique Pmthmax, le procédé utilisera le premier coefficient Coef1 pour obtenir la puissance batterie disponible Pbat sinon, le procédé utilisera le deuxième coefficient Coef2.

Le graphique illustré à la figure 1, propose un exemple d'évolution linéaire de la valeur des coefficients Coef1 et Coef2 entre 0 et 1.

Les coefficients de charge, Coef1 et Coef2, évoluent respectivement entre des seuils minimaux et maximaux respectivement SOC1min, SOC1max et SOC2min, SOC2 max, exprimés en pourcentage de SOC ; ces seuils étant compris à l'intérieur d'une plage d'utilisation de la batterie comprise entre un SOC minimal autorisé SOCmin et un seuil maximal autorisé SOCmax, qui est choisie dans l'exemple représenté sur le graphique de la figure 1 entre 10 et 90%.

Dans cet exemple, le premier coefficient Coef1 est égal à 0 pour SOC < SOC1 min (< 20% dans l'exemple du graphique).

Il est > 0 ou = 1 entre SOC1min et SOC1max et il est = 1 pour SOC > SOC1max.

Le deuxième coefficient Coef2 est égal à 0 pour SOC < SOC2min (< 45% dans l'exemple du graphique).

Il est > ou = 1 entre SOC2min et SOC2max et il est = 1 pour SOC > SOC2max. Le freinage récupératif est autorisé pour un SOC compris entre 0 et SOCmax. Il est interdit au-dessus.

L'évolution des coefficients de charge Coef1 et Coef2 n'est pas nécessairement linéaire et dépend notamment de la mise au point en agrément de conduite.

La puissance batterie Pbat disponible à chaque itération du procédé sera calculée en multipliant la puissance batterie nominale bat par le coefficient obtenu : soit Pbat = Coef1 *bat ou Pbat = Coef2*bat

Cette stratégie permet de maîtriser l'évolution du SOC en fonction du temps et du type d'utilisation du véhicule.

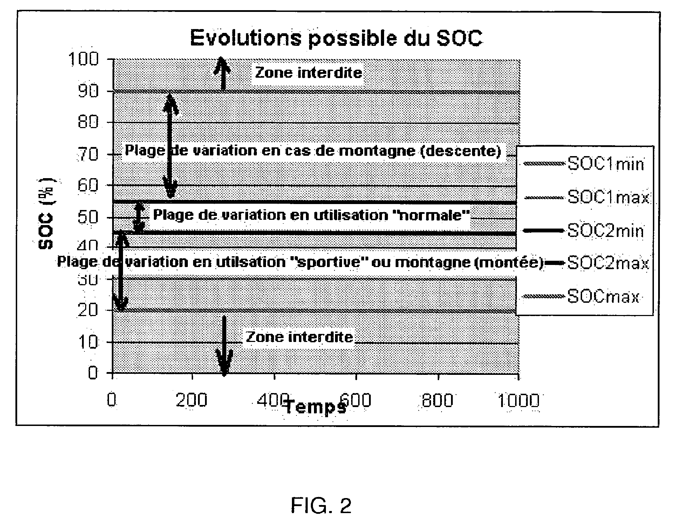

Le graphique de la figure 2 permet d'illustrer les évolutions possibles du SOC dans le temps en fonction de l'utilisation du véhicule.

Les valeurs numériques des seuils apparaissant dans ce graphique, ne sont données qu'à titre d'exemple pour aider à la compréhension. Ces valeurs sont définies lors de la mise au point de la stratégie en fonction de la capacité de la batterie à effectuer des cycles de charge et de décharge (capacité à « cycler »), de l'agrément de conduite et en fonction de la performance des différents organes de la chaîne de traction.

A titre d'exemple, on a défini trois plages de variation du SOC :
- une plage de variation pour une conduite sur routes de montagne (fortes descentes) ; le terme montagne s'applique aussi simplement à de faible variation d'altitude ou forte montée/descente (plage variable entre SOCmax = 90% et SOC2min = 55%) ;
- une plage de variation en utilisation dite « normale » ; en utilisation normale, la plage de variation du SOC est faible (10% par exemple, compris entre 45% et 55% ) ce qui permet de maximiser la durée de vie de la batterie, et
- une plage de variation en utilisation « sportive » ou montagne (montée) ; lors d'utilisations plus exceptionnelles telles qu'en montagne ou sportive, la plage d'utilisation sera augmentée afin de satisfaire à la prestation demandée (entre SOC2min = 45% et SOC1 min = 20%).

On a par ailleurs défini deux zones interdites respectivement pour SOC < 20% et SOC > 90%.

On peut établir le tableau suivant qui résume les différents modes de fonctionnement de la chaîne de traction pilotée par le procédé selon l'invention :

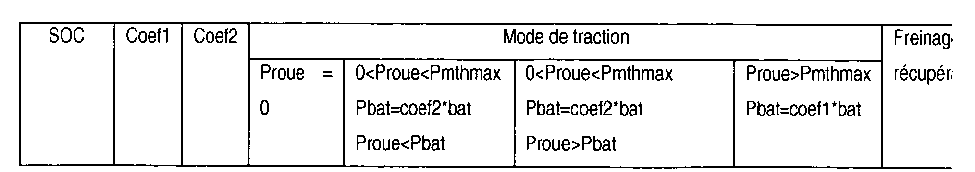

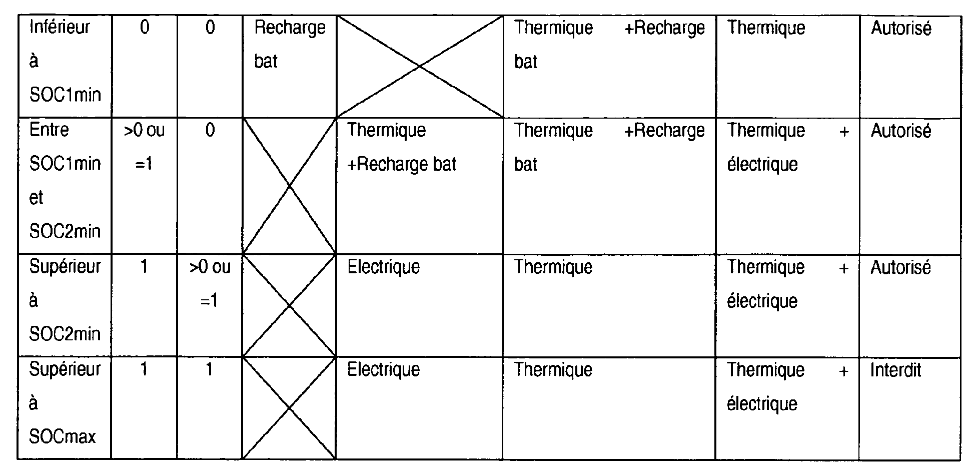

Sur ce tableau, on peut distinguer les différents modes de traction permis (considérés comme les paramètres de sortie de la stratégie de pilotage selon l'invention) en fonction des niveaux de SOC de la batterie, de la puissance de traction à la roue demandée par le conducteur Proue et de la puissance de freinage à la roue demandée par le conducteur Pfrein qui sont autant de paramètres d'entrée pour la stratégie de pilotage selon l'invention.

Les différents modes de traction possibles sont les suivants :
- Electrique (pur) ;
- Thermique (pur) ;
- Thermique + électrique (fonction boost avec Pbat=Coef1 *bat > 0);
- Thermique + recharge batterie (SOC<SOC2min et Proue>0)
- Recharge batterie à l'arrêt et
- Autorisation ou interdiction d'utiliser du freinage récupératif

A noter que la recharge de la batterie par le moteur thermique est autorisée même si la puissance de traction à la roue Proue = 0, c'est-à-dire pour une plage d'utilisation de la batterie inférieure à SOC1 min.

Pour gérer ces différents modes de traction, le procédé selon l'invention utilise un indicateur d'état (ou variable d'état) de besoin de recharge Pmin qui prend la valeur 0 quand une recharge n'est pas nécessaire et une valeur Pmthmin égale à un niveau de puissance minimal demandé au moteur en cas de besoin de recharge.

On a pu observer, dans le comportement dynamique des paramètres d'entrée, que la variation de SOC est un phénomène lent comparé à la variation de la puissance de traction à la roue demandée par le conducteur Proue. Un filtrage de cette puissance Proue sera donc nécessaire afin d'éviter une oscillation entre le mode de traction électrique pur et le mode thermique avec recharge de la batterie.

Au contraire, un autre mode d'oscillation peut se produire lorsque le conducteur demande une puissance constante. En effet, le mode de traction électrique pur décharge naturellement la batterie et une oscillation non souhaitée peut faire changer plus tôt que prévu le mode de traction électrique vers un mode de traction thermique avec recharge de la batterie qui va de nouveau refaire basculer le système dans un mode de traction électrique et donc entraîner une oscillation non souhaitée entre les modes de traction (avec arrêt et démarrage moteur thermique répétés)

Pour pallier à ce problème
d'oscillation, le procédé selon l'invention prévoit aussi un décalage du SOC cible de quelques % permettant d'éviter une oscillation entre le mode de traction électrique pure et le mode traction thermique avec recharge de la batterie et lors de la recharge batterie à l'arrêt. Ce qui permet avantageusement de créer une hystérésis permettant de supprimer l'oscillation.

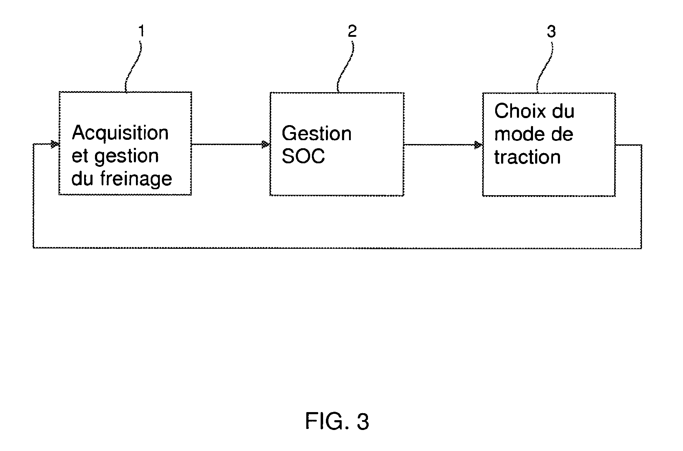

On va maintenant décrire ci-après le déroulement du procédé selon l'invention en référence aux figures 3 à 6

La figure 3 illustre une représentation synoptique des principales étapes du procédé de pilotage selon l'invention :
- étape 1 d'acquisition de la volonté conducteur, de l'état de charge de la batterie et de la gestion du freinage ;
- étape 2 de gestion de l'état de charge (SOC) de la batterie ; et
- étape 3 de choix du mode de traction.

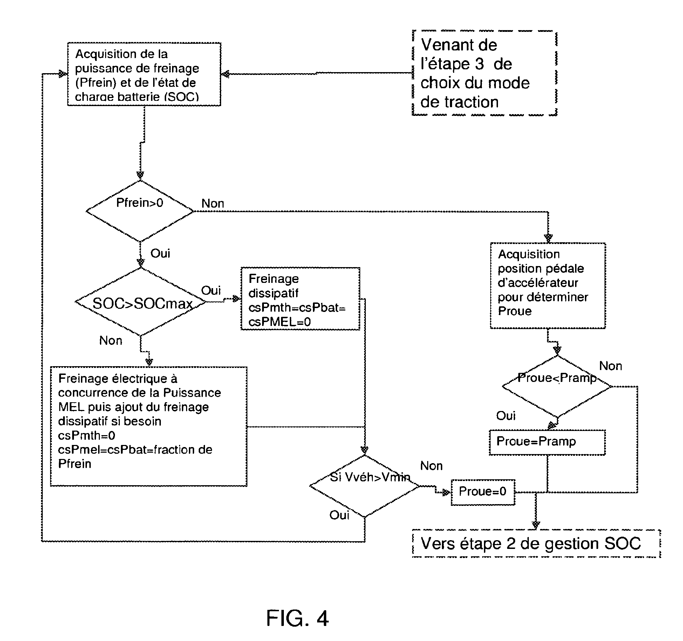

La figure 4 illustre plus en détail la première étape 1 du procédé selon l'invention.

Dans cette première étape 1, le procédé effectue l'acquisition de l'état de charge de la batterie SOC à un instant T déterminé ainsi que l'acquisition de la puissance de freinage à la roue demandée par le conducteur Pfrein.

Si aucune demande de freinage n'est détectée, Pfrein = 0, par exemple, pas de détection d'action sur la pédale de frein, alors le procédé fait une acquisition de la volonté d'accélération demandée par le conducteur, par exemple, en détectant la position de la pédale d'accélérateur pour déterminer la puissance à la roue Proue, appelée également l'image de la position pédale ; c'est cette image qui servira de paramètre d'entrée pour l'étape 2 de gestion de l'état du SOC de la batterie.

La puissance demandée à la roue Proue est alors comparée à une puissance dite de « rampage » Pramp qui correspond à une puissance minimale demandée à la roue si le conducteur ne touche ni au frein ni à l'accélérateur. Une telle fonction de rampage est notamment connue dans les boîtes de vitesses manuelles pilotées BVPM dans lesquelles les disques de friction de l'embrayage commandé restent en contact même sans aucune action du conducteur sur les pédales de frein ou d'accélérateur. On utilise également le terme de « léchage pour» définir cet état de fonctionnement de l'embrayage. Le même phénomène existe dans les chaînes de traction avec boîte de vitesses automatique (BVA) où le coupleur hydraulique continue à appliquer un couple à la roue sans action sur l'accélérateur.

Si la puissance demandée à la roue Proue < Pramp alors la puissance demandée à la roue est alignée à la puissance de rampage Pramp et c'est cette valeur de Proue = Pramp qui est transmise à l'étape 2 de gestion du SOC. Sinon, c'est la valeur de Proue courante qui est transmise à l'étape 2 de gestion du SOC.

Si une demande de freinage est détectée, Pfrein > 0, par exemple détection d'une action sur la pédale de frein, alors le procédé vérifie si le SOC acquis précédemment est supérieur à un SOCmax déterminé, SOC > SOXmax.

Si oui, SOC > SOCmax alors le procédé commande un freinage purement dissipatif et fixe les consignes de puissance de la machine électrique csMEL, de puissance du moteur thermique csPmth et de puissance batterie csPbat, à 0 puis vérifie que la vitesse du véhicule Vvéh est supérieure ou inférieure à un seuil déterminé Vmin (par exemple à 5 Km/h). Vmin correspond à un seuil de vitesse minimal sous lequel, le procédé autorise la recharge de la batterie si le SOC est inférieur à SOC déterminé.

Si Vvéh > Vmin alors le procédé réitère l'acquisition de Pfrein et du SOC à un nouvel instant T déterminé.

Si Vvéh < Vmin, et qu'une puissance de freinage est demandée la puissance à la roue est alors imposée nulle, et c'est cette valeur de Proue = 0 qui est transmise à l'étape 2 de gestion du SOC.

Si non, SOC < ou = SOCmax, alors il commande un freinage électrique à concurrence de la puissance délivrable par la machine électrique MEL en ajoutant du freinage dissipatif si nécessaire. Il fixe en même temps la consigne de puissance du moteur thermique csPmoth à 0 et les consignes de puissance de la machine électrique csPMEL et de puissance de la batterie csPbat à une fraction de la puissance de freinage demandée Pfrein puis vérifie que la vitesse du véhicule Vvéh est supérieure ou inférieure à un seuil déterminé Vmin (par exemple à 5 Km/h). Vmin correspond à un seuil de vitesse minimal sous lequel, le procédé autorise la recharge de la batterie si le SOC est inférieur à SOC déterminé.

Si Vvéh > Vmin alors le procédé réitère l'acquisition de Pfrein et du SOC à un nouvel instant T déterminé.

Si Vvéh < Vmin, et qu'une puissance de freinage est demandée, la puissance à la roue est alors imposée nulle, et c'est cette valeur de Proue = 0 qui est transmise à l'étape 2 de gestion du SOC.

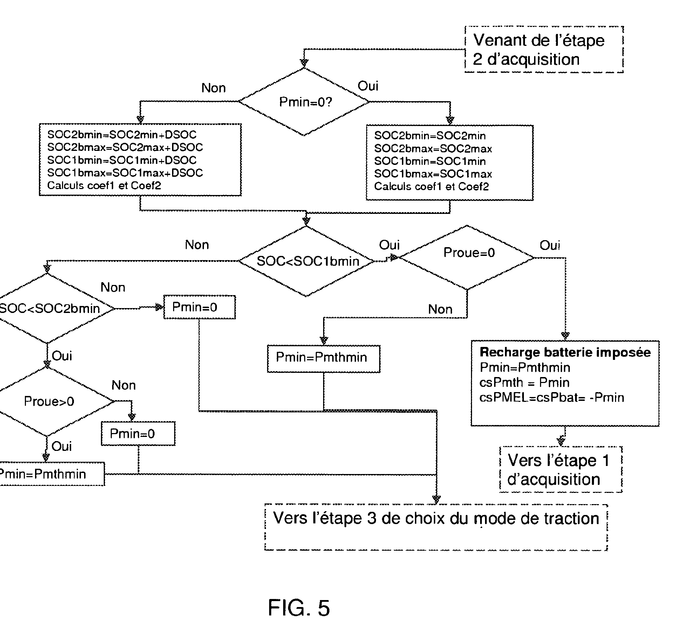

La figure 5 illustre plus en détail la deuxième étape 2 du procédé selon l'invention.

Dans cette deuxième étape 2, le procédé effectue la gestion de l'état de charge SOC de la batterie en fonction de la valeur du paramètre établie lors de l'étape d'acquisition 1.

C'est l'image de la position de l'accélérateur Proue qui est un paramètre d'entrée du système, et le niveau de SOC qui vont déterminer la valeur de la variable d'état Pmin qui peut prendre deux valeurs : 0 (pas de besoin de recharge de la batterie) ou Pmthmin (niveau de puissance minimum demandé au moteur thermique en cas de besoin de recharge de la batterie par le moteur thermique).

Si Pmin = 0 (pas de besoin de recharge), il n'y a donc pas de décalage des seuils, les seuils sont initialisés comme suit :
SOC2bmin = SOC2min
SOC2bmax = SOC2max
SOC1bmin SOC1min
SOC1bmax = SOC1max
puis le procédé calcule les coefficients de charge Coef1 et Coef2.

Si Pmin est différent de 0 (donc égale à Pmthmin)
alors le procédé fixe des seuils de SOC avec un décalage DSOC, correspondant à quelques % du SOC, par rapport aux seuils nominaux SOC1min, SOC1max, SOC2min et SOC2max :
SOC2bmin = SOC2min + DSOC
SOC2bmax = SOC2max + DSOC
SOC1 bmin = SOC1min + DSOC
SOC1bmax = SOC1max + DSOC
puis le procédé calcule les coefficients de charge Coef1 et Coef2 correspondant à ces nouveaux seuils.

Le procédé détermine ensuite si le SOC est inférieur au seuil minimum du premier coefficient de charge Coef1 avec décalage SOC1bmin (SOC < SOC1bmin) et,
Si SOC < SOC1bmin est vérifié, alors il détermine si Proue = 0 et Vveh < Vmin, et
Si Proue = 0 et Vveh < Vmin est vérifié, alors il impose la recharge de la batterie, fixe la valeur de Pmin à Pmthmin, fixe la consigne de puissance moteur thermique csPmth à la valeur de Pmin et fixe les consignes de puissance de la machine électrique csPMEL et de puissance batterie csPbat à -Pmin. Ce sont ces variables avec ces valeurs qui sont alors prises en compte par la première étape 1 d'acquisition.

Si Proue = 0 et Vveh < Vmin n'est pas vérifié, alors Pmin prend la valeur Pmthmin, valeur qui sera ensuite prise en compte par l'étape 3 de choix de mode de traction.

Si SOC < SOC1bmin n'est pas vérifié, alors il détermine si SOC < SOC2bmin, et
si SOC < SOC2bmin est vérifié, alors il détermine si Proue > 0 et,
si Proue > 0 est vérifié, alors Pmin prend la valeur Pmthmin, valeur qui sera ensuite prise en compte par l'étape 3 de choix de mode de traction.

Si Proue n'est pas vérifié, alors Pmin prend la valeur 0, valeur qui sera ensuite prise en compte par l'étape 3 de choix de mode de traction.

Si SOC < S OC2bmin n'est pas vérifié, alors Pmin prend la valeur 0 valeur qui sera ensuite prise en compte par l'étape 3 de choix de mode de traction.

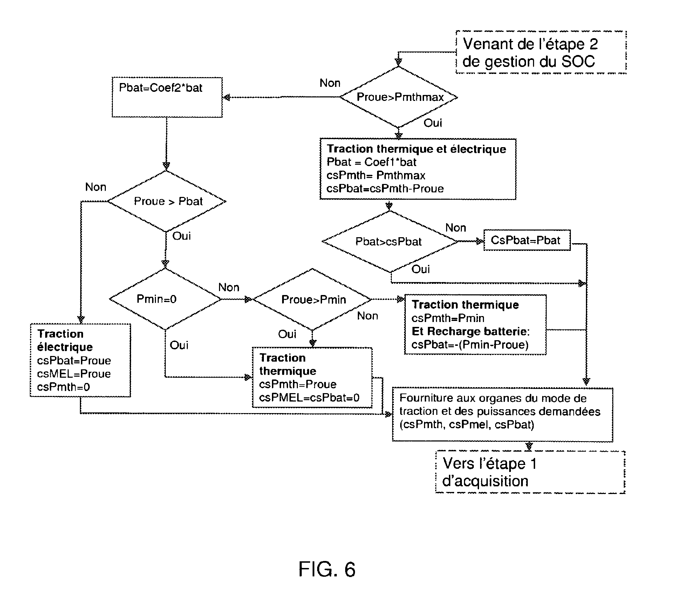

La figure 6 illustre plus en détail la troisième étape 3 du procédé selon l'invention.

Dans cette troisième étape, le procédé choisit le mode de traction le plus approprié à la situation.

Dans cette étape, le procédé détermine si Proue > Pmthmax (Pmthmax correspond à la puissance maximale disponible par le moteur thermique).

Si Proue > Pmthmax est vérifié, alors c'est le mode de traction thermique et électrique qui est choisi : la valeur de la variable Pbat, correspondant à la puissance batterie disponible, est obtenue en effectuant le produit de la puissance maximale (nominale) de la batterie bat par le premier coefficient d'état de charge Coef1 ; la consigne de puissance moteur thermique csPmth est fixée à Pmthmax et la consigne de puissance batterie csPbat est fixée csPmth - Proue, et
Si Pbat > csPbat est vérifié alors le procédé fournit aux organes de la chaîne de tarction, le mode de traction choisi et les puissances demandées via les consignes csPmth, csPmel, csPbat.

Ces informations réinitialisent l'étape 1 d'acquisition.

Si Pbat > csPbat n'est pas vérifié, alors CsPbat = Pbat et le procédé fournit aux organes de la chaîne de traction, le mode de traction choisi et les puissances demandées via les consignes csPmth, csPmel, csPbat.

Ces informations réinitialisent les variables de l'étape 1 d'acquisition.

Si Proue > Pmthmax n'est pas vérifié, alors Pbat est calculé en effectuant le produit de la puissance maximale (nominale) de la batterie bat par le deuxième coefficient d'état de charge Coef2, et
Si Proue > Pbat est vérifié, et
si Pmin = 0 est vérifié, alors c'est le mode de traction thermique qui est chois en fixant csPmth = Proue et csPMEL = csPbat = 0 ; le procédé fournit alors aux organes de la chaîne de traction, le mode de traction choisi et les puissances demandées via les consignes csPmth, csPmel, csPbat.

Ces informations réinitialisent l'étape 1 d'acquisition.

Si Pmin = 0 n'est pas vérifié, et

Si Proue > Pmin est vérifié, alors c'est le mode de traction thermique qui est chois en fixant csPmth = Proue et csPMEL = csPbat = 0 ; le procédé fournit alors aux organes de la chaîne de traction, le mode de traction choisi et les puissances demandées via les consignes csPmth, csPmel, csPbat. Ces informations réinitialisent l'étape 1 d'acquisition.

Si Proue > Pmin n'est pas vérifié, alors c'est le mode de traction thermique qui est choisi en fixant csPmth = Pmin et en imposant la recharge de la batterie et en fixant csPbat = (Pmin - Proue) ; le procédé fournit alors aux organes de la chaîne de traction, le mode de traction choisi et les puissances demandées via les consignes csPmth, csPmel, csPbat.

Ces informations réinitialisent l'étape 1 d'acquisition.

Si Proue > Pbat n'est pas vérifié, alors c'est le mode de traction électrique qui est choisi, en fixant csPbat = Proue, csMEL = Proue et csPmth = 0 ; le procédé fournit alors aux organes de la chaîne de traction, le mode de traction choisi et les puissances demandées via les consignes csPmth, csPmel, csPbat.

Ces informations réinitialisent l'étape 1 d'acquisition.

Dans l'exemple qui a servi de support à la description faite ci-dessus, on a considéré deux coefficients de charge avec quatre seuils de SOC indépendants SOC1min, SOC1max, SOC2min et SOC2max.

On peut tout à fait envisager, sans sortir du cadre de la présente invention, d'avoir quatre seuils de SOC qui soient interdépendants et que l'action sur un des quatre seuils entraîne une évolution contrôlées des trois autres. Cette dépendance est tout à fait avantageuse notamment pour lier la gestion d'énergie à la variation d'altitude en cas de couplage avec un système de navigation par satellite de type GPS ou autre.

A titre d'exemple, on peut par exemple fixer SOC2min avec des écarts : SOC2max = SOC1min+10, SOC1min =SOC2min -25, SOC1max= SOC2min-15.

Il est rappelé enfin que le procédé de pilotage selon l'invention n'est pas lié à une architecture spécifique de chaîne de traction.

Cela implique bien évidemment un dispositif d'adaptation ou interface, entre le procédé selon l'invention et la chaîne de traction considéré.

Cette interface devra être capable d'accepter ou pas le pilotage proposé par le procédé de pilotage selon l'invention qui propose une stratégie optimale de pilotage basée uniquement sur l'état de charge de la batterie sans se soucier ni de la performance, ni de la disponibilité (état de marche) d'un ou des organes constituants la chaîne de traction.

Lexique des variables et paramètres utilisés dans la description et les figures :

### Variables :

bat = Puissance maximale de la batterie
SOC = Etat de charge de la batterie (State Of Charge)
SOCmin = SOC minimum autorisé
SOCmax= SOC maximum autorisé
Coef1= coefficient entre 0 et 1 dépend de l'état de charge dans la situation de vie où la puissance demandée à la roue Proue est supérieure à la puissance maximum du moteur thermique seul Pmthmax
SOC1min= SOC imposant Coef1=0
SOC1 max= SOC imposant Coef1=1
Coef2= coefficient entre 0 et 1 dépend de l'état de charge dans la situation de vie où la puissance demandée à la roue est inférieure à la puissance maximum du moteur thermique seul
SOC2min= SOC imposant Coef1=0
SOC2max= SOC imposant Coef1=1
DSOC= décalage de quelques % du SOC cible permettant d'éviter une oscillation entre le mode de traction électrique pure et le mode traction thermique + recharge et lors de la recharge batterie à l'arrêt
SOC1bmin = SOC1min quand Pmin = 0 et SOC1max+DSOC quand Pmin = Pmthmin
SOC1bmax = SOC1max quand Pmin = 0 et SOC1max+DSOC quand Pmin = Pmthmin
SOC2bmin = SOC2min quand Pmin = 0 et SOC2min+DSOC quand Pmin = Pmthmin
SOC2bmax = SOC2max quand Pmin = 0 et SOC2max+DSOC quand Pmin = Pmthmin
Pbat = Puissance batterie disponible à chaque pas de calcul. Obtenu en multipliant bat par Coef1 ou Coef2
Proue= Puissance à la roue demandée par le conducteur (image de la position pédale)
Pfrein= puissance de freinage demandée par action sur la pédale de frein Pmin = Variable d'état égale à 0 ou à Pmthmin (indicateur d'état de besoin de recharge)
Pmthmin = Niveau de puissance minimum demandé au moteur en cas de besoin de recharge par le moteur
Pmthmax= Puissance maxi du moteur thermique
csMEL= consigne de puissance de la machine électrique MEL
csPMth= consigne de puissance moteur thermique
csPbat = consigne de puissance batterie
Vmin = Vitesse minimale correspondant à un seuil sous lequel on autorise la recharge de la batterie si le SOC est inférieur à SOC1 min
Pramp = Puissance de rampage correspondant à une puissance minimale demandée à la roue si le conducteur ne touche ni au frein ni à l'accélérateur

### Paramètres d'entrée de la stratégie de pilotage :

Niveau de SOC de la batterie
Puissance de traction à la roue demandée par le conducteur Proue
Puissance de freinage à la roue demandée par le conducteur Pfrein

### Paramètres de sortie :

### Choix du mode de traction:

Electrique pur
Thermique pur
Thermique + électrique (fonction boost) (Pbat positif)
Thermique + recharge batterie (Pbat négatif)
Recharge batterie à l'arrêt véhicule
Autorisation ou interdiction d'utilisation du freinage récupératif

### Paramètres de réglages :

Niveaux extrêmes de SOC batterie : SOC mini et maxi
Niveaux de SOC en fonctionnement normal ou boost : SOC1min, SOC1max, SOC2min, SOC2max
Valeur de DSOC permettant de régler un risque d'oscillation entre modes de traction
Pmthmin = Niveau de puissance minimum demandé au moteur en cas de besoin de recharge par le moteur thermique

## Revendications

1. Procédé de pilotage d'une chaîne de traction hybride d'un véhicule, notamment d'un véhicule automobile, du type comportant différents organes dont un moteur thermique et au moins une machine électrique de traction apte à fonctionner en moteur ou en générateur et permettant des modes de traction thermique et/ou électrique, un système de freinage apte à réaliser un freinage récupératif et/ou dissipatif, et une batterie ayant une puissance électrique nominale déterminée (bat), **caractérisé en ce qu'**il comporte les étapes suivantes :
- une première étape (1) d'acquisition de la volonté d'accélération du conducteur pour déterminer la puissance à la roue correspondante (Proue), d'acquisition du niveau d'état de charge de la batterie (SOC), et d'acquisition de la puissance de freinage à la roue demandée par le conducteur (Pfrein) permettant de décider s'il convient d'appliquer un freinage électrique ou dissipatif, ;
- une deuxième étape (2) de gestion de l'état de charge (SOC) qui, en fonction d'un indicateur d'état de besoin de recharge de la batterie (Pmin),
quand la puissance demandée à la roue (Proue) est supérieure à la puissance maximale disponible en sortie du moteur thermique (Pmthmax), calcule la puissance batterie disponible (Pbat) en multipliant la puissance nominale de la batterie (bat) par un premier coefficient de charge de la batterie (Coef1) dont la valeur évolue entre 0 et 1 suivant une première loi préétablie, entre un premier seuil minimal déterminé (SOC1min) d'état de charge de la batterie, supérieur au un seuil minimal autorisé (SOCmin), et un premier seuil maximal déterminé (SOC1max) , inférieur à un seuil maximum autorisé (SOCmax), et
quand la puissance demandée à la roue (Proue) est inférieure à la puissance maximale disponible en sortie du moteur thermique (Pmthmax), calcule la puissance batterie disponible (Pbat) en multipliant la puissance nominale de la batterie (bat) par un deuxième coefficient de charge de la batterie (Coef2) dont la valeur évolue entre 0 et 1 suivant une deuxième loi préétablie, entre un deuxième seuil minimal déterminé (SOC2min) d'état de charge de la batterie, supérieur au seuil minimal autorisé (SOCmin), et un deuxième seuil maximal déterminé (SOC2max), inférieur au seuil maximal autorisé (SOCmax) ; et
- une troisième étape (3) de choix du mode de traction qui en fonction de la puissance batterie disponible (Pbat), de la puissance de traction à la roue demandée par le conducteur (Proue), et de la puissance maximale disponible en sortie du moteur thermique (Pmthmax), décide du mode de traction le plus adapté à la situation de vie du véhicule.

2. Procédé selon la revendication 1, **caractérisé en ce que** l'étape de choix du mode de traction (3) choisit le mode de traction électrique pur quand la puissance à la roue demandée par le conducteur (Proue) est inférieure à la puissance batterie disponible (Pbat) et quand l'état de charge de la batterie (SOC) est supérieur au deuxième seuil minimal déterminé (SOC2min).

3. Procédé selon la revendication 1, **caractérisé en ce que** l'étape (3) de choix du mode de traction choisit le mode de traction thermique avec recharge de la batterie quand la puissance à la roue demandée par le conducteur (Proue) est supérieure à la puissance batterie disponible (Pbat) et quand l'état de charge de la batterie (SOC) est inférieur au deuxième seuil minimal déterminé (SOC2min), et quand la puissance à la roue demandée par le conducteur (Proue) est inférieure à la puissance disponible par le moteur thermique (Pmthmin).

4. Procédé selon la revendication 1, **caractérisé en ce** l'étape (3) de choix du mode de traction choisit le mode de traction thermique seul, sans recharge de la batterie, quand la puissance à la roue demandée par le conducteur (Proue) est supérieure à la puissance batterie disponible (Pbat) et quand l'état de charge de la batterie est supérieur au deuxième seuil minimal déterminé (SOC2min).

5. Procédé selon la revendication 1, **caractérisé en ce** l'étape (3) de choix du mode de traction choisit le mode de traction thermique seul, sans recharge de la batterie, quand la puissance à la roue demandée par le conducteur (Proue) est supérieure à la puissance maximale disponible en sortie du moteur thermique (Pmthmax) et quand l'état de charge de la batterie (SOC) est inférieur au premier seuil minimal déterminé (SOC1 min).

6. Procédé selon la revendication 1, **caractérisé en ce** l'étape (3) de choix du mode de traction choisit les modes de traction thermique et électrique, sans recharge de la batterie, quand la puissance à la roue demandée par le conducteur (Proue) est supérieure à la puissance maximale disponible en sortie du moteur thermique (Pmthmax) et quand l'état de charge de la batterie (SOC) est supérieur au premier seuil minimal déterminé (SOC1 min).

7. Procédé selon la revendication 1, **caractérisé en ce que** lorsque le freinage électrique est utilisé et atteint la puissance maximale disponible par la machine électrique, il ajoute le freinage dissipatif en cas de besoin.

8. Procédé selon la revendication 1, **caractérisé en ce que** le freinage électrique est interdit lorsque le niveau de charge de la batterie (SOC) est supérieur au seuil maximal autorisé (SOCmax).

9. Procédé selon la revendication 1, **caractérisé en ce que** lorsque le conducteur n'actionne ni le frein, ni l'accélérateur, il commande une puissance de rampage (Pramp) générée par la chaîne de traction.

10. Procédé selon la revendication 1, **caractérisé en ce** l'étape de gestion (2) déclenche impérativement la recharge de la batterie quand l'état de charge de la batterie (SOC) est inférieur au premier seuil minimal déterminé (SOC1 min) et quand la puissance demandée à la roue par le conducteur (Proue) est nulle.

11. Procédé selon l'une des revendications précédentes, **caractérisé en ce qu'**il consiste à rajouter un décalage de seuil (DSOC) respectivement aux premier et deuxième seuils (SOC1min, SOC1max et SOC2min, SOC2max) d'état de charge de la batterie quand l'indicateur d'état de besoin de recharge de la batterie (Pmin) est égal au niveau de puissance minimum demandé au moteur thermique en cas de besoin de recharge de la batterie par le moteur thermique (Pmthmin), pour éviter toute oscillation entre le mode de traction électrique pur et le mode de traction thermique.

## Claims

1. A method for controlling a hybrid drive train of a vehicle, in particular a motor vehicle, of the type comprising various members including a heat engine and at least one electric drive machine adapted to operate as a motor or a generator and providing heat and/or electric drive modes, a braking system adapted to provide regenerative and/or dissipative braking, and a battery having a set nominal electric power (bat), **characterized in that** it comprises the following steps:
- a first step (1) of obtaining the acceleration request of the driver in order to determine the corresponding power at the wheel (Pᵣₒᵤₑ [P_{wheel}]), of obtaining the state of charge level of the battery (SOC) and of obtaining the braking power at the wheel requested by the driver (P_{frein} [P_{brake}]), enabling a decision to be made as to whether electric or dissipative braking is to be applied;
- a second step (2) of managing the state of charge (SOC) which, as a function of a battery recharge requirement status indicator (Pₘᵢₙ), when the power requested at the wheel (Pᵣₒᵤₑ [P_{wheel}]) is greater than the maximum power available from the heat engine (Pₘₜₕₘₐₓ [Pi_{cemax}]), calculating the available battery power(P_{bat}) by multiplying the nominal battery power (bat) by a first battery charge coefficient (Coef₁) whose value varies between 0 and 1 according to a first pre-established law, between a first set minimum threshold (SOC₁ₘᵢₙ) of the battery state of charge, greater than the allowed minimum threshold (SOCₘᵢₙ), and a first set maximum threshold (SOC₁ₘₐₓ), which is less than an allowed maximum threshold (SOCₘₐₓ), and when the power requested at the wheel (Pᵣₒᵤₑ [P_{wheel}]) is less than the maximum power available from the heat engine (Pₘₜₕₘₐₓ [P_{icemax}]), calculating the available battery power (P_{bat}) by multiplying the nominal battery power (bat) by a second battery charge coefficient (Coef₂) whose value varies between 0 and 1 according to a second preestablished law, between a second set minimum threshold (SOC₂ₘᵢₙ) of the battery state of charge, which is greater than the allowed minimum threshold (SOCₘᵢₙ), and a second set maximum threshold (SOC₂ₘₐₓ), which is less than the allowed maximum threshold (SOCₘₐₓ); and
- a third step (3) of selecting the drive mode which, as a function of the available battery power (P_{bat}), the drive power at the wheel requested by the driver, and the maximum power available from the heat engine (Pₘₜₕₘₐₓ [P_{icemax}]), determines the drive mode best suited to the current status of the vehicle.

2. A method according to claim 1, **characterized in that** the drive mode selection step (3) selects the pure electric drive mode when the power at the wheel requested by the driver (Pᵣₒᵤₑ [P_{wheel}]) is less than the available battery power (P_{bat}) and when the state of charge of the battery (SOC) is greater than the second set minimum threshold (SOC₂ₘᵢₙ).

3. A method according to claim 1, **characterized in that** the drive mode selection step (3) selects the heat drive mode with battery recharge when the power at the wheel requested by the driver (Pᵣₒᵤₑ [P_{wheel}]) is greater than the available battery power (P_{bat}) and when the battery state of charge (SOC) is less than the second set minimum threshold (SOC₂ₘᵢₙ), and when the power at the wheel requested by the driver (Pᵣₒᵤₑ [P_{wheel}]) is less than the power available from the heat engine (Pₘₜₕₘᵢₙ [P_{icemin}]).

4. A method according to claim 1, **characterized in that** the drive mode selection step (3) selects the heat drive mode alone, without battery recharge, when the power at the wheel requested by the driver (Pᵣₒᵤₑ [P_{wheel}]) is greater than the battery power available (P_{bat}) and when the state of charge of the battery (SOC) is greater than the second set minimum threshold (SOC₂ₘᵢₙ).

5. A method according to claim 1, **characterized in that** the drive mode selection step (3) selects the heat drive mode alone, without battery recharge, when the power at the wheel requested by the driver (Pᵣₒᵤₑ [P_{wheel}]) is greater than the maximum power available from the heat engine (Pₘₜₕₘₐₓ [P_{icemax}]), and when the state of charge of the battery (SOC) is less than the first set minimum threshold (SOC₁ₘᵢₙ).

6. A method according to claim 1, **characterized in that** the drive mode selection step (3) selects the heat and electric drive modes, without battery recharge, when the power at the wheel requested by the driver (Pᵣₒᵤₑ [P_{wheel}]) is greater than the maximum power available from the heat engine (Pₘₜₕₘₐₓ [P_{icemax}]), and when the battery state of charge (SOC) is greater than the first set minimum threshold (SOC₁ₘᵢₙ).

7. A method according to claim 1, **characterized in that**, when electric braking is used and reaches the maximum power available through the electric machine, it adds dissipative braking, should it be necessary.

8. A method according to claim 1, **characterized in that**, electric braking is prohibited when the level of charge of the battery (SOC) is greater than the maximum allowed threshold (SOCₘₐₓ).

9. A method according to claim 1, **characterized in that**, when the driver is operating neither the brake nor the accelerator, he/she controls a ramping power (Pᵣₐₘₚ) generated by the drive train.

10. A method according to claim 1, **characterized in that** the management step (2) causes the battery to recharge when the state of charge of the battery (SOC) is less than the first set minimum threshold (SOC₁ₘᵢₙ) and when the power at the wheel requested by the driver (Pᵣₒᵤₑ [P_{wheel}]) is zero.

11. A method according to one of the previous claims , **characterized in that** it involves adding a threshold off-setting ( [DSOC]) to the first and second battery state of charge thresholds, respectively (SOC₁ₘᵢₙ, SOC₁ₘₐₓ and SOC₂ₘᵢₙ, SOC₂ₘₐₓ) when the battery recharge requirement status indicator (Pₘᵢₙ) is equal to the minimum power level required from the heat engine in the event battery recharging by the heat engine (Pₘₜₕₘᵢₙ [P_{icemin}]) is necessary, in order to prevent any fluctuation between the purely electric drive mode and the heat drive mode.

## Patentansprüche

1. Verfahren zum Ansteuern eines Hybridantriebssystems eines Fahrzeugs, insbesondere eines Kraftfahrzeugs, von der Art umfassend verschiedene Organe, zu denen ein Verbrennungsmotor und mindestens ein Elektroantrieb, der als Motor oder Generator funktionieren kann und thermische und/oder elektrische Antriebsarten ermöglicht, ein Bremssystem, das in der Lage ist, eine Rekuperations- und/oder Dissipationsbremsung auszuführen, und eine Batterie, die eine bestimmte elektrische Nennleistung (bat) aufweist, gehören, **dadurch gekennzeichnet, dass** es folgende Schritte umfasst:
- einen ersten Schritt (1) der Erfassung der Beschleunigungsabsicht des Fahrers, um die entsprechende Leistung am Rad (Proue) zu bestimmen, der Erfassung des Ladezustandspegels der Batterie (SOC) und der Erfassung der vom Fahrer verlangten Radbremsleistung (Pfrein), die es ermöglicht zu entscheiden, ob eine elektrische oder dissipative Bremsung anzuwenden ist;
- einen zweiten Schritt (2) der Verwaltung des Ladezustands (SOC), der in Abhängigkeit von einer Zustandsangabe des Aufladebedarfs der Batterie (Pmin), wenn die am Rad verlangte Leistung (Proue) größer ist als die maximale Leistung (Pmthmax), die am Ausgang des Verbrennungsmotors zur Verfügung steht, die verfügbare Batterieleistung (Pbat) berechnet, indem die Nennleistung der Batterie (bat) mit einem ersten Ladekoeffizienten (Coef1) der Batterie multipliziert wird, dessen Wert sich gemäß einer zuvor aufgestellten ersten Regel zwischen 0 und 1 bewegt, und zwar zwischen einem ersten bestimmten minimalen Schwellenwert (SOC1min) des Ladezustands der Batterie, der größer ist als ein zulässiger minimaler Schwellenwert (SOCmin), und einem ersten bestimmten maximalen Schwellenwert (SOC1 max), der kleiner ist als ein zulässiger maximaler Schwellenwert (SOCmax), und
wenn die am Rad verlangte Leistung (Proue) kleiner ist als die maximale Leistung, die am Ausgang des Verbrennungsmotors (Pmthmax) zur Verfügung steht, die verfügbare Batterieleistung (Pbat) berechnet, indem die Nennleistung der Batterie (bat) mit einem zweiten Ladekoeffizienten (Coef2) der Batterie multipliziert wird, dessen Wert sich gemäß einer zuvor aufgestellten zweiten Regel zwischen 0 und 1 bewegt, und zwar zwischen einem zweiten bestimmten minimalen Schwellenwert (SOC2min) des Ladezustands der Batterie, der größer ist als der zulässige minimale Schwellenwert (SOCmin), und einem zweiten bestimmten maximalen Schwellenwert (SOC2max), der kleiner ist als der zulässige maximale Schwellenwert (SOCmax); und
- einen dritten Schritt (3) der Auswahl der Antriebsart, die in Abhängigkeit von der verfügbaren Batterieleistung (Pbat), der vom Fahrer am Rad verlangten Antriebsleistung (Proue) und der maximalen Leistung, die am Ausgang des Verbrennungsmotors zur Verfügung steht, über die Antriebsart entscheidet, die am besten an jeweilige Situation des Fahrzeugs angepasst ist.

2. Verfahren gemäß Anspruch 1, **dadurch gekennzeichnet, dass** der Schritt (3) der Auswahl der Antriebsart die rein elektrische Antriebsart auswählt, wenn die vom Fahrer verlangte Leistung am Rad (Proue) niedriger ist als die verfügbare Batterieleistung (Pbat) ist und der Ladezustand der Batterie (SOC) größer als der bestimmte minimale Schwellenwert (SOC2min) ist.

3. Verfahren gemäß Anspruch 1, **dadurch gekennzeichnet, dass** der Schritt (3) der Auswahl der Antriebsart die thermische Antriebsart mit Wiederaufladung der Batterie bestimmt, wenn die vom Fahrer verlangte Leistung am Rad (Proue) größer als die verfügbare Batterieleistung (Pbat) ist, und wenn der Ladezustand der Batterie (SOC) kleiner als der zweite bestimmte minimale Schwellenwert (SOC2min) ist, und wenn die vom Fahrer verlangte Leistung am Rad (Proue) kleiner ist als die verfügbare Leistung des Verbrennungsmotors (Pmthmin).

4. Verfahren gemäß Anspruch 1, **dadurch gekennzeichnet, dass** der Schritt (3) der Auswahl der Antriebsart die thermische Antriebsart alleine ohne Wiederaufladung der Batterie bestimmt, wenn die vom Fahrer verlangte Leistung am Rad (Proue) größer als die verfügbare Batterieleistung (Pbat) ist, und wenn der Ladezustand der Batterie größer als der zweite bestimmte minimale Schwellenwert (SOC2min) ist.

5. Verfahren gemäß Anspruch 1, **dadurch gekennzeichnet, dass** der Schritt (3) der Auswahl der Antriebsart die thermische Antriebsart alleine ohne Wiederaufladung der Batterie auswählt, wenn die vom Fahrer verlangte Leistung am Rad (Proue) größer ist als die maximal verfügbare Leistung am Ausgang des Verbrennungsmotors (Pmthmax), und wenn der Ladezustand der Batterie (SOC) kleiner als der erste bestimmte minimale Schwellenwert (SOC1 min) ist.

6. Verfahren gemäß Anspruch 1, **dadurch gekennzeichnet, dass** der Schritt (3) der Auswahl der Antriebsart die thermischen und elektrischen Antriebsarten ohne Wiederaufladung der Batterie auswählt, wenn die vom Fahrer verlangte Leistung am Rad (Proue) größer als die maximale verfügbare Leistung am Ausgang des Verbrennungsmotors (Pmthmax) ist, und wenn der Ladezustand der Batterie (SOC) größer als der erste bestimmte minimale Schwellenwert (SOC1 min) ist.

7. Verfahren gemäß Anspruch 1, **dadurch gekennzeichnet, dass** wenn die elektrische Bremsung verwendet wird und die maximale verfügbare Leistung des Elektromotors erreicht, die dissipative Bremsung soweit erforderlich hinzu geschaltet wird.

8. Verfahren gemäß Anspruch 1, **dadurch gekennzeichnet, dass** die elektrische Bremsung untersagt ist, wenn der Ladezustand der Batterie (SOC) größer als der zulässige maximale Schwellenwert (SOCmax) ist.

9. Verfahren gemäß Anspruch 1, **dadurch gekennzeichnet, dass** wenn der Fahrer weder die Bremse noch das Gaspedal betätigt, eine Schleichleistung (Pramp) gesteuert wird, die vom Antriebssystem erzeugt wird.

10. Verfahren gemäß Anspruch 1, **dadurch gekennzeichnet, dass** der Schritt (2) der Verwaltung zwingend das Aufladen der Batterie ausgelöst, wenn der Ladezustand der Batterie (SOC) kleiner ist als der erste bestimmte minimale Schwellenwert (SOC1 min), und wenn die vom Fahrer verlangte Leistung am Rad (Proue) gleich Null ist.

11. Verfahren gemäß einer der vorhergehenden Ansprüche, **dadurch gekennzeichnet, dass** es darin besteht, eine Schwellenwert-Verschiebung (DSOC) jeweils zu den ersten und zweiten Schwellenwerten (SOC1 min, SOC1 max und SOC2min, SOC2max) des Ladezustands der Batterie hinzuzufügen, wenn der Zustandsangabe des Aufladebedarfs der Batterie (Pmin) gleich dem minimalen Leistungspegel ist, der von dem Verbrennungsmotor verlangt wird, wenn die Batterie durch den Verbrennungsmotor aufgeladen werden muss (Pmthmin), um ein eventuelles Schwanken zwischen der rein elektrischen Antriebsart und der thermischen Antrieb zu vermeiden.
